# EUROPÄISCHE PATENTSCHRIFT

(11) **EP 0 714 992 B1**
(45) Veröffentlichungstag und Bekanntmachung des Hinweises auf die Patenterteilung: **15.04.1998**
(21) Anmeldenummer: 95117885.4
(22) Anmeldetag: 14.11.1995
(51) Int. Cl.: C22B 34/12

(54) **Verfahren zum Erhöhen der Ausbeute bei der Chlorierung titanhaltiger Rohstoffe**
Method for increased yield when chlorinating titaniferous materials
Procédé pour augmenter le rendement pour la chloruration de matériaux titanifères

(30) Priorität: 01.12.1994 DE 4442783
(43) Veröffentlichungstag der Anmeldung: 05.06.1996
(73) Patentinhaber: KRONOS TITAN-GmbH, D-51373 Leverkusen (DE)
(72) Erfinder: Hartmann, Achim, Dipl.-Ing., D-50259 Pulheim (DE)

(56) Entgegenhaltungen:
- EP-A- 0 318 231
- WO-A-87/00826
- DE-A- 2 612 804
- GB-A- 776 295
- GB-A- 2 059 786
- US-A- 4 435 365
- US-A- 4 854 972

## Beschreibung

Die Erfindung betrifft ein Verfahren zur kontinuierlichen Erzeugung von Titantetrachlorid durch Chlorierung titanhaltiger Rohstoffe in Anwesenheit von Koks bei Temperaturen um 1000 °C in einem Wirbelschichtreaktor, Austragen der sich bildenden flüchtigen Metallchloride aus dem Reaktor, wobei auch feinteiliges Bettmaterial, insbesondere unreagiertes Erz (TiO₂), Koks (C) und Quarz (SiO₂) mitgerissen wird, Abkühlen (Quenchen) des Gas-Feststoff-Gemisches auf ca. 150 °C, Abscheiden des als 2 Zyklonstaub bezeichneten Feststoffgemisches bestehend aus kondensierten Metallchloriden sowie den anderen Feststoffen (TiO₂, C, SiO₂) in einem Zyklon, Suspendieren des Zyklonstaubs in einer Flüssigkeit, Klassieren der Feststoffteilchen der Suspension in einem Trennapparat, wobei mehrere Fraktionen anfallen, Trocknen und Rückführen der titandioxidreichen Fraktion in den Reaktor.

In der EP 318 231 A1 ist der erhebliche Aufwand zur Aufarbeitung dargestellt, wenn das zusammen mit den flüchtigen Metallchloriden aus dem Reaktor ausgetragene feinteilige Bettmaterial (vor allem Erz und Koks) getrennt und rückgeführt werden soll. Für die Trennung werden Hydrozyklone und Setztische eingesetzt, wobei Setztische sehr kritisch auf die Zusammensetzung reagieren, wodurch eine ständige Überwachung der Prozeßparameter erfolgen muß, wenn sich die Zusammensetzung des eingesetzten Erzes ändert. Es wird bei diesem Verfahren zwar relativ scharf der Koks von dem rückführbaren Titandioxid mit großem Aufwand abgetrennt, der Einfluß des Siliziumdioxides im Fließbett auf die Chlorierungsreaktion wird aber bei dem Verfahren nicht hinreichend beachtet und unterschätzt, so daß es zu einer unerwünschten Anreicherung von Quarz im Bett des Chlorierungsreaktors kommt und der Betrieb abgebrochen werden muß.

Der Erfindung liegt die Aufgabe zugrunde, die Wirtschaftlichkeit und Betriebssicherheit des Chlorierungsverfahrens weiter zu verbessern.

Die Aufgabe wird von einem Verfahren der eingangs beschriebenen Art dadurch gelöst, daß die Klassierung einstufig in einem Hydrozyklon, bei dem das Verhältnis Durchmesser zu Vordruck im Bereich 40 bis 180 mm/bar_{abs} liegt, erfolgt und die titandioxidreiche Fraktion gemahlen in den Wirbelschichtreaktor zurückgeführt wird.

Der wesentliche Vorteil der Erfindung ist darin zu sehen, daß mit einem einfachen Klassierapparat unter bestimmten Betriebsbedingungen eine sinnvolle Aufteilung der Feststoffe des angeteigten Zyklonstaubes auf eine titandioxidreiche und eine titandioxidarme Fraktion gelingt.

Das Hydrozyklon wird dabei unter untypischen Verfahrensparametern betrieben; sie bewirken eine relativ geringe Radialgeschwindigkeit. Je nach Durchsatz können mehrere Hydrozyklone parallel geschaltet werden. Eine Überwachung oder Steuerung ist beim Betrieb unter den speziellen Verfahrensbedingungen aber nicht erforderlich.

Es hat sich gezeigt, daß es wesentlich sinnvoller ist, keine scharfe Trennung in 2 hinsichtlich Koks und Titandioxid möglichst reine Produkte anzustreben, daß es dagegen genügt, durch eine relativ unscharfe einstufige Trennung in einem Hydrozyklon 2 Fraktionen zu erhalten. Über den Oberlauf des Hydrozyklons wird ein Großteil des Siliziumdioxids aus dem Prozeß entfernt, in dieser Fraktion findet sich auch der Großteil des Kokses. Im Unterlauf des Hydrozyklons ist der Siliziumdioxidgehalt erheblich reduziert; in dieser Fraktion befindet sich der überwiegende Anteil des zurückzuführenden Titandioxids im Zyklonstaub (und auch ein geringer Rest Koks).

Durch die in den Unteransprüchen beschriebenen Maßnahmen kann das Verfahren weiter ausgestaltet werden, wodurch Beeinträchtigungen durch die unscharfe Trennung der Komponenten weiter reduziert werden.

Ein wichtiges Verfahrensmerkmal ist die Mahlung des rückgeführten Materials, wobei der weit überwiegende Anteil eine Teilchengröße unter 0,1 mm haben soll. Die titandioxidreiche Fraktion soll dort in das Fließbett eingebracht werden, wo der Chlorgehalt in der Umgebung so hoch wie möglich ist, d. h. im Bodenbereich des Wirbelschichtreaktors oder sogar durch direkte Zugabe in das Fluidisierungsgas (Rückchlor) beim Gaseintritt in den Reaktor.

Die vorgeschlagenen Maßnahmen bewirken, daß die rückgeführten (kleinen) Erzpartikel im Fließbett des Reaktors hinreichend schnell in Titantetrachlorid umgewandelt werden, andererseits die Quarzteilchen wegen ihrer feinen Korngröße nicht im Fließbett verbleiben, sondern rasch mit dem Gasstrom ausgetragen werden. Das über den Hydrozyklon-Unterlauf rückgeführte Siliziumdioxid in der titandioxidreichen Fraktion bewirkt so keine Anreicherung von Quarz im Fließbett.

Es ist auch als vorteilhaft anzusehen, daß die kleinen Koksteilchen überwiegend über den Oberlauf des Zyklons mit den Quarzteilchen ausgetragen und nicht in den Reaktor zurückgeführt werden. Der feinteilige Koks kann bei den Strömungsverhältnissen in der Wirbelschicht nicht so lange im Fließbett gehalten werden, bis er verbrannt ist; er belastet nur die dem Reaktor nachgeschalteten Apparate (Anteige, Filter). Zuviel feinteiliger Koks im Zyklonstaub verlangt zudem einen höheren Wasseranteil in der Anteige, wodurch der Eisenchloridgehalt sinkt.

In der titandioxidarmen Fraktion des Hydrozyklon-Oberlaufes findet sich neben dem Quarz überwiegend der feinteilige Koksanteil wieder. Zwar hat diese Koks-Fraktion wegen des Quarzes einen höheren Aschegehalt, jedoch ist das Produkt immer noch besser als das bisherige, bei dem der gesamte abgefilterte Feststoff der angeteigten Abfallchloride als Heizstoff verwendet worden ist.

Da das Verfahren mit einem einzigen Trennapparat, einem Hydrozyklon, auskommt, und selbst dabei keine Überwachung der Betriebsparameter erforderlich ist, erweist sich das Verfahren als sehr sicher und kostengünstig. Selbst wenn der Hydrozyklon-Oberlauf nicht weiter verwendet werden kann und deponiert werden muß, wird durch das erfindungsgemäße Verfahren die zu deponierende Menge reduziert.

Es ist dem Fachmann bekannt, wie er die Aufteilung der Fraktionen in einem Hydrozyklon steuern kann. Mit den im folgenden angegebenen Parameterbereichen läßt sich eine titandioxidreiche und titandioxidarme Fraktion erzeugen. Das Verhältnis Durchmesser zu Vordruck sollte im Bereich 40 bis 180 mm/bar_{abs} und das Verhältnis Volumenoberlauf zu Volumenunterlauf im Bereich 6 bis 12 liegen. Es ist günstig, wenn die Suspension eine Temperatur um 60 °C aufweist und der Anteil des gelösten Eisen(II)chlorids 18 Gew.-% beträgt. Es versteht sich, daß diese im wesentlichen die Viskosität und die Dichte beeinflussenden Parameter untereinander zusammenhängen.

Die aus dem Hydrozyklonoberlauf und -unterlauf austretenden Suspensionen werden filtriert (Filterpresse, Bandfilter); der Filterkuchen wird gewaschen, das Filtrat kann aus beiden Fraktionen als Chemikalie bei der Wasseraufbereitung Verwendung finden. Der getrocknete Filterkuchen von der titandioxidreichen Fraktion wird bevorzugt auf einer Kugelmühle gemahlen. Ein Mahlgrad auf eine Korngröße d < 0,1mm von 99 % sollte erreicht werden.

Ca. 75 % des unreagiert ausgetragenen Erzes wird nach diesem Verfahren noch in Titantetrachlorid umgewandelt.

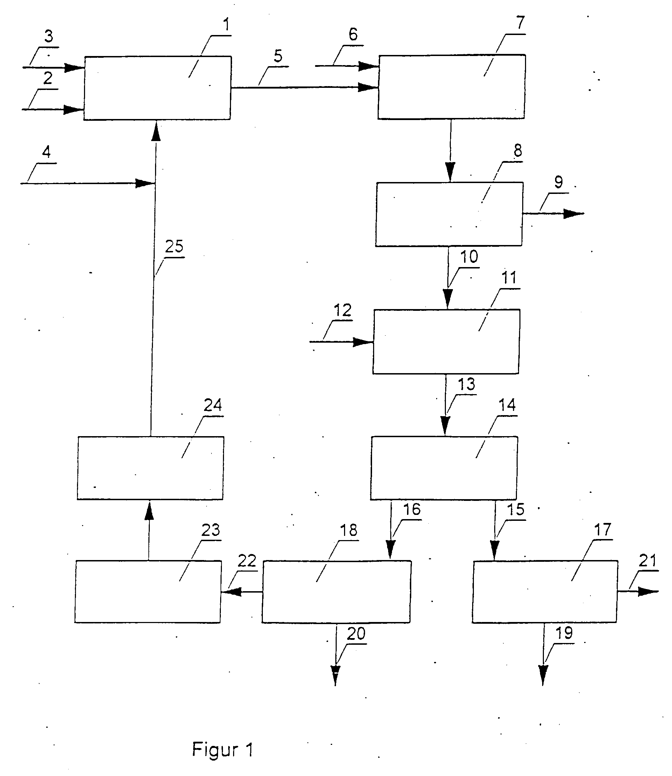

Die Erfindung ist in der Zeichnung dargestellt und weiter beispielhaft beschrieben. Fig. 1 zeigt das Blockschaltbild einer Chlorierung mit Staubabscheidung und Rückführung des Titandioxids.

In einem als Wirbelschichtreaktor ausgebildeten Chlorierungsreaktor 1 werden die Metalloxide aus dem Erz 2, vorzugsweise an Titandioxid angereicherter Schlacke, zusammen mit Koks 3, vorzugsweise Petrolkoks, und Chlorgas 4 in einer heterogenen Feststoffreaktion in gasförmige Metallchloride umgewandelt, wobei auch erhebliche Mengen an Kohlendioxid und Kohlenmonoxid gebildet werden. Chlorlieferant und Fluidisierungsmedium ist das von der Oxidation des Titantetrachlorids zurückgeführte Kreislaufgas (Rückchlor); es enthält im wesentlichen ca. 75 bis 80 Vol.-% Chlor und neben Stickstoff und Kohlendioxid etwa 6 Vol.-% Sauerstoff. Das aus dem Reaktor 1 austretende Gasgemisch 5 setzt sich zusammen aus Bestandteilen wie CO, CO₂, COS, HCl, N₂, niedrig siedenden und hoch siedenden Chloriden wie TiCl₄, FeCl₃, FeCl₂, SnCl₄, SiCl₄, VOCl₃, NaAlCl₄, sowie Feststoffen wie TiO₂, SiO₂ und Koks. Durch Abkühlen des Gas-Feststoff-Gemisches (Quenchen mit Titantetrachlorid 6) auf knapp über den Siedepunkt des Titantetrachlorids wird in dem Einspritzturm 7 die hochsiedende Fraktion kondensiert und in einem Zyklon 8 abgetrennt. Die weitere Behandlung des bei 9 austretenden dampfförmigen Titantetrachlorids ist bekannt und für die vorliegende Erfindung ohne Bedeutung.

Die vom Zyklon 8 abgeschiedenen Feststoffe werden als Zyklonstaub 10 oder - weil diese Feststoffe häufig deponiert werden - als Abfallchloride bezeichnet. Sie werden in dem Rührgefäß 11 (Anteige) mit Wasser 12 angeteigt. Es bildet sich dabei eine Suspension 13; die Metallchloride, insbesondere FeCl₂, gehen in Lösung. Die Feststoffe sind die aus dem Wirbelbett ausgetragenen Feststoffe: TiO₂, SiO₂ und Koks.

In einem Hydrozyklon 14 erfolgt die Klassierung. Ziel ist eine titandioxidarme und eine titandioxidreiche Fraktion. Siliziumdioxid reichert sich dabei in der titandioxidarmen Fraktion an.

Die (parallel geschalteten) Hydrozyklone haben einen Durchmesser von 70-100 mm, der Vordruck beträgt 1,3-1,5 bar_{abs}, das Volumen des Oberlaufs ist bis zu 12mal so groß wie das des Unterlaufs, die Siliziumdioxidanreicherung findet im Oberlauf 15 und die Titandioxidanreicherung im Unterlauf 16 des Hydrozyklons statt. Von Einfluß auf die Trennung ist auch die Viskosität und Dichte der Suspension; die Temperatur der Suspension sollte nicht unter 50°C sein und/oder es sollte ein Eisen(II)-gehalt von mindestens 15 Gew.-% eingehalten werden. Bei diesen Bedingungen werden mehr als 50 Gew.-% des im Zyklonstaub enthaltenen Quarzes über den Oberlauf des Zyklons ausgetragen. Im Unterlauf des Zyklons sind noch bis zu 30 Gew.-% des aus dem Reaktor 1 ausgetragenen Kokses enthalten.

Die beiden Fraktionen, die Suspensionen vom Oberlauf 15 und vom Unterlauf 16 des Hydrozyklons 14, werden getrennt in gleicher Weise weiterbehandelt; die Kästchen 17, 18 in der Zeichnung stehen für Trennapparate wie Bandfilter oder Filterpressen; die Wäsche des Kuchens ist nicht besonders dargestellt. Das Filtrat 19, 20 kann für die Wasseraufbereitung weiterverwendet werden. Der im Trennapparat 17 gebildete Feststoff 21 findet als Brennstoff (Kronocarb®) Verwendung; sein Heizwert ist infolge der Abtrennung des Erzes höher, bzw. sein Aschegehalt niedriger als von reinem Zyklonstaub 10. Der aus dem Trennapparat 18 abgeschiedene titandioxidreiche Feststoff wird getrocknet 23 und gemahlen 24 und in den Reaktor 1 zurückgeführt.

Dem Mahlen der titandioxidreichen Fraktion kommt erhebliche Bedeutung zu. Das in den Reaktor 1 zurückzuführende Material soll dort eingespeist werden, wo die Chlorkonzentration am höchsten ist, also im unteren Bereich des Fließbettes des Reaktors 1. Bevorzugt ist aber auch die direkte Eingabe in die Rückchloreinleitungsrohre in den Reaktor. Durch diese Maßnahme werden die zurückgeführten zerkleinerten Erzpartikel nahezu vollständig in Titantetrachlorid umgewandelt, auch wenn sie wegen ihrer Größe nicht lange im Fließbett verbleiben. Die gemahlenen Siliziumdioxidpartikel sind so klein, daß sie ohne Probleme schnell aus dem Fließbett ausgetragen werden, so daß durch die Rückführung keine Anreicherung des Quarzes in der Wirbelschicht zu befürchten ist.

### Beispiel 1 (Stand der Technik)

Ein Wirbelschichtreaktor 1 wird bei 950 °C mit 7790 Teilen Schlacke 2 (85 % TiO₂, 11 % FeO, 1,6 % SiO₂), 2560 Teilen Koks 3 und 12 050 Teilen Chlorgas 4 beschickt, woraus 14 730 Teile Titantetrachlorid 9 und 3755 Teile eines Feststoffgemisches 10 gebildet werden. Das Feststoffgemisch enthält 2455 Teile Metallchloride, insbesondere 1520 Teile Eisen(II)chlorid, 415 Teile Titandioxid, 765 Teile Koks und 120 Teile Quarz. Das Feststoffgemisch 10 wird mit 5300 Teilen Wasser 12 angeteigt 11, die Suspension 13 wird in einer Filterpresse filtriert und der Filterkuchen gewaschen. Es fallen dabei 1860 Teile Kuchen mit 30 Gew.-% Wassergehalt an; der Kuchen hat nach der Trocknung folgende Zusammensetzung: Koks 58,7 Gew.-%, Titandioxid 32 Gew.-%. Siliziumdioxid 9,3 Gew.-%. Der Heizwert des Materials beträgt wegen des hohen Aschegehaltes von 41,3 % nur etwa 21300 kJ/kg.

### Beispiel 2

Bei gleichen Ausgangsbedingungen wie in Beispiel 1 werden 6740 l Suspension 13, die 9050 Teile Feststoff (mit einem Eisengehalt von 8,5 Gew.-%) enthält, einer Batterie von 4 (parallel geschalteten) Hydrozyklonen 14 aufgegeben. Die Hydrozyklone 14 sind durch folgende Parameter charakterisiert: Durchmesser 75 mm, Durchmesser der Oberlaufdüse 18 mm, Durchmesser der Unterlaufdüse 6 mm. Der Aufgabedruck beträgt 1,5 bar_{abs}. Die Suspension hat eine Temperatur von 60 °C.

Im Oberlauf 15 des Hydrozyklons 14 werden 6020 l Suspension mit 104 Teilen TiO₂, 490 Teilen Koks und 59 Teilen SiO₂ ausgetragen. Im Unterlauf 16 des Hydrozyklons 14 werden 720 l Suspension mit 311 Teilen TiO₂, 275 Teilen Koks und 61 Teilen SiO₂ ausgetragen. Die Suspension 16 wird auf einer Membranfilterpesse 18 filtriert und gewaschen. Der gewaschene Kuchen 22 wird in einer direkt mit Verbrennungsgasen beheizten Kugelmühle 24 (D = 1,2 m, I = 4 m) bei 90 °C gemahlen und getrocknet. Das gemahlene Produkt hat folgende Korngrößenverteilung:
d > 0,2 mm 0 %
0,2 bis 0,09 mm 1 %
0,09 bis 0,063 mm 19 %
0,063 bis 0,04 mm 32 %
kleiner 0,04 mm 48 %

Die gemahlene (siliziumdioxidärmere) titandioxidreiche Fraktion 25 wird über ein Druckschleusensystem dem Chlorierungsraktor 1 wieder aufgegeben. 700 kg/h in einem Stickstoffstrom von 90 Nm³/h werden über eine Zellenradschleuse in den Chlorierungsraktor eingebracht. 97,5 Gew.-% des rückgeführten Titandioxidstaubes werden in Titantetrachlorid umgewandelt. Der Siliziumdioxidgehalt im Fließbett liegt auch nach 22 Stunden unverändert bei 14 Gew.-%.

Aus dem Oberlauf des Hydrozyklons 14 fallen nach der Filtration 17 946 Teile feuchter Kuchen 21 an (31 Gew.-% Wassergehalt). Der Feststoffanteil setzt sich zusammen aus 75,0 Gew.-% Koks, 15,9 Gew.-% Titandioxid, 9,0 Gew.-% Siliziumdioxid. Der Aschegehalt dieses Produktes ist um ca. 56,5 % kleiner als der nach Beispiel 1, d.h. der Heizwert beträgt 27200 kJ/kg.

## Patentansprüche

1. Verfahren zur kontiniuierlichen Erzeugung von Titantetrachlorid durch Chlorieren titanhaltiger Rohstoffe in Anwesenheit von Koks bei Temperaturen um 1000 °C in einem Wirbelschichtreaktor, Austragen der sich bildenden flüchtigen Metallchloride aus dem Reaktor, wobei auch feinteiliges Bettmaterial, insbesondere unreagiertes Erz (TiO₂), Koks (C) und Quarz (SiO₂), mitgerissen wird, Abkühlen (Quenchen) des Gas-Feststoff-Gemisches auf ca. 150 °C, Abscheiden des als Zyklonstaub bezeichneten Feststoffgemisches bestehend aus kondensierten Metallchloriden sowie den anderen Feststoffen (TiO₂, C, SiO₂) in einem Zyklon, Suspendieren des Zyklonstaubs in einer Flüssigkeit, Klassieren der Feststoffteilchen der Suspension in einem Trennapparat, wobei mehrere Fraktionen anfallen, Trocknen und Rückführen der titandioxidreichen Fraktion in den Reaktor, dadurch gekennzeichnet, daß die Klassierung einstufig in einem Hydrozyklon, bei dem das Verhältnis Durchmesser zu Vordruck im Bereich 40 bis 180 mm/bar_{abs} liegt, erfolgt und die titandioxidreiche Fraktion gemahlen in den Wirbelschichtreaktor zurückgeführt wird.

2. Verfahren nach Anspruch 1, dadurch gekennzeichnet, daß wenigstens 99 % der Teilchen der zurückgeführten titandioxdreichen Fraktion kleiner als 0,1 mm sind.

3. Verfahren nach Anspruch 1 oder 2, dadurch gekennzeichnet, daß die rückgeführte titandioxidreiche Fraktion über das Fluidisierungsmedium (Rückchlor) eingetragen wird.

4. Verfahren nach einem der Ansprüche 1 bis 3, dadurch gekennzeichnet, daß die Temperatur der Suspension im Hydrozyklon wenigstens 50 °C beträgt.

5. Verfahren nach einem der Ansprüche 1 bis 4, dadurch gekennzeichnet, daß in der Suspension wenigstens 15 Gew.-% Eisen(II)chlorid gelöst ist.

6. Verfahren nach einem der Ansprüche 1 bis 5, dadurch gekennzeichnet, daß die Trennung in einem Hydrozyklon erfolgt, bei dem das Volumenverhältnis Oberlauf zu Unterlauf zwischen 6 und 12 liegt.

## Claims

1. Process for the continuous production of titanium tetrachloride by chlorinating raw materials containing titanium in the presence of coke at temperatures of around 1000°C in a fluidised bed reactor, discharging the volatile metal chlorides as they are forming from the reactor, wherein finely divided bed material, in particular unreacted ore (TiO₂), coke (C) and quartz (SiO₂) is also entrained, cooling (quenching) the gas/solid mixture to approx. 150°C, precipitating the mixture of solids, termed cyclone dust, consisting of condensed metal chlorides and the other solids (TiO₂, C, SiO₂) in a cyclone, suspending the cyclone dust in a fluid, classifying the solid particles of the suspension in a separating apparatus, wherein two or more fractions are obtained, drying and returning the titanium dioxide-rich fraction to the reactor, characterised in that classification proceeds in a single stage in a hydrocyclone, in which the ratio of diameter to initial pressure is in the range 40 to 180 mm/bar_{abs} and the titanium dioxide-rich fraction is returned to the fluidised bed reactor in ground form.

2. Process according to claim 1, characterised in that at least 99% of the particles of the returned titanium dioxide-rich fraction are smaller than 0.1 mm.

3. Process according to claim 1 or 2, characterised in that the returned titanium dioxide-rich fraction is introduced via the fluidising medium (return chlorine).

4. Process according to one of claims 1 to 3, characterised in that the temperature of the suspension in the hydrocyclone is at least 50°C.

5. Process according to one of claims 1 to 4, characterised in that at least 15 wt.% of iron(II) chloride is dissolved in the suspension.

6. Process according to one of claims 1 to 5, characterised in that separation is performed in a hydrocyclone in which the volume ratio of overflow to underflow is between 6 and 12.

## Revendications

1. Procédé pour la production continue de chlorure de titane par la chloruration de matériaux titanifères, en présence de coke, à des températures autour de 1000°C dans un réacteur à combustible fluidisé, le prélèvement des chlorures métalliques volatils qui se forment dans le réacteur, le matériau finement divisé, en particulier le minerai n'ayant pas réagi (TiO₂), le coke (C) et le quartz (SiO₂) étant entraînés, le refroidissement (arrêt) du mélange gaz-matières liquides à environ 150°C, l'extraction du mélange de matières solides, appelé poussière à cyclone, consistant en chlorures métalliques condensés et en les autres matières solides (TiO₂, C, SiO₂), dans un séparateur à cyclone, la mise en suspension de la poussière à cyclone dans un liquide, le tri des particules solides de la suspension dans un appareil séparateur, plusieurs fractions en résultant, le séchage et la réintroduction de la fraction riche en dioxyde de titane dans le réacteur, caractérisé en ce que le tri a lieu en une étape dans un hydrocyclone, dans lequel le rapport du diamètre à la pression d'alimentation se situe dans l'intervalle de 40 à 180 mm/bar_{abs}, et en ce que la fraction riche en dioxyde de titane est réintroduite moulue dans le réacteur à combustible fluidisé.

2. Procédé suivant la revendication 1, caractérisé en ce qu'au moins 99% des particules de la fraction riche en dioxyde de titane réintroduite sont plus petites que 0,1 mm.

3. Procédé suivant la revendication 1 ou 2, caractérisé en ce que la fraction riche en dioxyde de titane réintroduite est introduite par le milieu de fluidification (chlore de retour).

4. Procédé suivant l'une quelconque des revendications 1 à 3, caractérisé en ce que la température de la suspension dans l'hydrocyclone est au moins de 50°C.

5. Procédé suivant l'une quelconque des revendications 1 à 4, caractérisé en ce qu'au moins 15% en poids de chlorure de fer (II) sont dissous dans la suspension.

6. Procédé suivant l'une quelconque des revendications 1 à 5, caractérisé en ce que la séparation a lieu dans un hydrocyclone, dans lequel le rapport volumique du cours supérieur et du cours inférieur se situe entre 6 et 12.
